# EUROPEAN PATENT APPLICATION

(11) **EP 4 664 572 A1**
(43) Date of publication of application: **17.12.2025**
(21) Application number: 23959716.4
(22) Date of filing: 28.11.2023
(51) Int. Cl.: H01M 10/04

(54) **BATTERY CELL, BATTERY, AND ELECTRIC DEVICE**

(71) Applicant: Contemporary Amperex Technology Co., Limited, Ningde, Fujian 352100 (CN)
(72) Inventor: ZHENG, Donglai, Ningde, Fujian 352100 (CN); SHI, Dongyang, Ningde, Fujian 352100 (CN); SHI, Yan, Ningde, Fujian 352100 (CN)
(74) Representative: Kraus & Lederer PartGmbB
(86) International application number: PCT/CN2023/134689
(87) International publication number: WO 2025/111791

(57) **Abstract**

A battery cell, a battery, and an electric device. The battery cell comprises a casing, a pressure relief structure and an electrode assembly, wherein the casing is provided with a first wall; the pressure relief structure is arranged on the first wall; and the electrode assembly is arranged in the casing and comprises a plurality of electrode sheet layers stacked in a first direction, the plurality of electrode sheet layers including cathode electrode sheet layers and anode electrode sheet layers, each electrode sheet layer comprising an electrode sheet body, a first active material layer and a second active material layer, the first active material layer and the second active material layer being respectively arranged on two sides of the thickness of the electrode sheet body, at least one electrode sheet layer being constructed as a first preset electrode sheet layer, the distance between the first active material layer of the first preset electrode sheet layer and the first wall being greater than the distance between the second active material layer of the first preset electrode sheet layer and the first wall, and the first direction being parallel to a plane where the first wall is located.

## Description

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. Generally, a battery includes a plurality of battery cells, and the battery cells generate a large amount of heat during the continuous charging and discharging process. Generally, a pressure relief structure is disposed in the battery cell, and the pressure is relieved through the pressure relief structure during the thermal runaway of the battery cell. However, for a typical battery cell, the reliability of the pressure relief structure is poor, which affects the reliability of the battery cell.

### SUMMARY

The present application provides a battery cell, a battery, and an electric device, which can improve the reliability of the battery cell.

In a first aspect, an embodiment of the present application provides a battery cell. The battery cell includes: a housing, where the housing is provided with a first wall; a pressure relief structure, where the pressure relief structure is disposed on the first wall; and an electrode assembly, where the electrode assembly is disposed in the housing and includes a plurality of electrode plate layers stacked in a first direction. The plurality of electrode plate layers include cathode electrode plate layers and anode electrode plate layers; each electrode plate layer includes an electrode plate body, a first active substance layer, and a second active substance layer; the first active substance layer and the second active substance layer are disposed on both sides of a thickness of the electrode plate body, respectively, where at least one electrode plate layer is configured as a first preset electrode plate layer, a distance x1 between the first active substance layer of the first preset electrode plate layer and the first wall is greater than a distance x2 between the second active substance layer of the first preset electrode plate layer and the first wall, and the first direction is parallel to a plane where the first wall is located.

In the above technical solution, the at least one electrode plate layer is configured as the first preset electrode plate layer, the distance x1 between the first active substance layer of the first preset electrode plate layer and the first wall is greater than the distance x2 between the second active substance layer of the first preset electrode plate layer and the first wall, and the pressure relief structure is disposed on the first wall, so that the amount of the active substance of the battery cell proximal to the first wall is relatively small, and when the battery cell expands and deforms, it is beneficial to weakening the effect of a part of the housing proximal to the first wall on the first wall, and weakening the pulling effect of other walls of the housing on the pressure relief structure through the first wall, so that the probability of damage such as cracking of the pressure relief structure on the first wall can be reduced, and meanwhile, the probability of liquid leakage due to the cracking of the pressure relief structure can also be reduced to a certain extent, thereby improving the reliability of the battery cell.

In some embodiments, at least one cathode electrode plate layer is configured as the first preset electrode plate layer; or at least one anode electrode plate layer is configured as the first preset electrode plate layer, and the cathode electrode plate layer adjacent to at least a part of the anode electrode plate layer configured as the first preset electrode plate layer is also configured as the first preset electrode plate layer.

In the above technical solution, the at least one cathode electrode plate layer is configured as the first preset electrode plate layer, so that the amount of the active substance of the battery cell proximal to the first wall is reduced on the at least one cathode electrode plate layer. As a result, the accommodation capacity of the electrode assembly for lithium ions can be better considered when the battery cell is a lithium battery while the risk of pulling damage of the pressure relief structure on the first wall is reduced, which is beneficial to achieving a design requirement that the coverage range of the active substance layer of the anode electrode plate layer is greater than the coverage range of the corresponding active substance layer of the cathode electrode plate layer in the battery cell, so as to maintain the good electrochemical performance of the battery cell. The at least one anode electrode plate layer is configured as the first preset electrode plate layer, and the cathode electrode plate layer adjacent to at least the part of the anode electrode plate layer configured as the first preset electrode plate layer is also configured as the first preset electrode plate layer, so that when the amount of the active substance of the battery cell proximal to the first wall is reduced on the at least one anode electrode plate layer, the amount of the active substance is also correspondingly reduced on the cathode electrode plate layer adjacent to at least the part of the anode electrode plate layer configured as the first preset electrode plate layer. As a result, the accommodation capacity of the electrode assembly for lithium ions can be better considered when the battery cell is a lithium battery while the risk of pulling damage of the pressure relief structure on the first wall is reduced, which is beneficial to achieving a design requirement that the coverage range of the active substance layer of the anode electrode plate layer is greater than the coverage range of the corresponding active substance layer of the cathode electrode plate layer in the battery cell, so as to maintain the good electrochemical performance of the battery cell.

In some embodiments, all the cathode electrode plate layers in the plurality of electrode plate layers are configured as the first preset electrode plate layer; or, all the electrode plate layers are configured as the first preset electrode plate layer.

In the above technical solution, all the cathode electrode plate layers in the plurality of electrode plate layers are configured as the first preset electrode plate layer, so as to further reduce the amount of the active substance of the battery cell proximal to the first wall, which is beneficial to further reducing the pulling effect on the pressure relief structure on the first wall, thereby further improving the reliability of the battery cell; all the electrode plate layers are configured as the first preset electrode plate layer, so as to further reduce the amount of the active substance of the battery cell proximal to the first wall, which is beneficial to further reducing the pulling effect on the pressure relief structure on the first wall, thereby further improving the reliability of the battery cell.

In some embodiments, the cathode electrode plate layer and the anode electrode plate layer adjacent to each other are configured as the first preset electrode plate layer, respectively, and in the cathode electrode plate layer and the anode electrode plate layer adjacent to each other, the first active substance layer of the cathode electrode plate layer and the first active substance layer of the anode electrode plate layer are disposed face-to-face or back-to-back.

In the above technical solution, in the cathode electrode plate layer and the anode electrode plate layer that are disposed adjacent to each other and both configured as the first preset electrode plate layer, the first active substance layer of the cathode electrode plate layer and the first active substance layer of the anode electrode plate layer are disposed face-to-face or back-to-back, so that the coverage ranges of the active substance layers on the opposite sides of the cathode electrode plate layer and the anode electrode plate layer that are disposed adjacent to each other match, which is beneficial to achieving a design requirement that the coverage range of the active substance layer of the anode electrode plate layer is greater than the coverage range of the corresponding active substance layer of the cathode electrode plate layer in the battery cell while the risk of pulling damage of the pressure relief structure on the first wall is reduced, so as to maintain the good electrochemical performance of the battery cell.

In some embodiments, at least one anode electrode plate layer and two cathode electrode plate layers adjacent thereto are configured as the first preset electrode plate layer, respectively, the first active substance layer of the at least one anode electrode plate layer and the first active substance layer of one of the adjacent cathode electrode plate layers are disposed face-to-face, and the second active substance layer of the at least one anode electrode plate layer and the second active substance layer of the other one of the adjacent cathode electrode plate layers are disposed face-to-face.

In the above technical solution, the first active substance layer and the second active substance layer of the anode electrode plate layer configured as the first preset electrode plate layer correspond to the first active substance layer and the second active substance layer of the cathode electrode plate layer adjacent to the anode electrode plate layer face-to-face, respectively, so that the coverage ranges of the active substance layers on the opposite sides of the cathode electrode plate layer and the anode electrode plate layer that are disposed adjacent to each other match, which is beneficial to achieving a design requirement that the coverage range of the active substance layer of the anode electrode plate layer is greater than the coverage range of the corresponding active substance layer of the cathode electrode plate layer in the battery cell while the risk of pulling damage of the pressure relief structure on the first wall is reduced, so as to maintain the good electrochemical performance of the battery cell.

In some embodiments, x1 - x2 ≥ 2 mm.

In the above technical solution, by setting x1 - x2 ≥ 2 mm, the energy density of the battery cell is not excessively reduced to a certain extent while the amount of the active substance of the battery cell proximal to the first wall is appropriately reduced to reduce the pulling effect on the pressure relief structure, so that the use reliability and the capacity of the battery cell are considered, and the processing of the first preset electrode plate layer is also facilitated.

In some embodiments, x1 - x2 ≤ 12 mm.

In the above technical solution, by setting x1 - x2 ≤ 12 mm, both the use reliability and the capacity of the battery cell are further considered.

In some embodiments, at least one cathode electrode plate layer is configured as the first preset electrode plate layer, and a distance x11 between the first active substance layer of the at least one cathode electrode plate layer and the first wall is greater than or equal to 3 mm.

In the above technical solution, by setting x11 ≥ 3 mm, the amount of the active substance is effectively reduced and the pulling effect on the pressure relief structure is effectively weakened, and the processing of configuring the cathode electrode plate layer as the first preset electrode plate layer is facilitated.

In some embodiments, x11 ≤ 17 mm.

In the above technical solution, by setting x11 ≤ 17 mm, neither is the excessive waste of the cathode electrode plate body caused, nor is the energy density of the battery cell excessively reduced, while the amount of the active substance of the battery cell proximal to the first wall is appropriately reduced to reduce the pulling effect on the pressure relief structure, so that both the capacity and the cost of the battery cell are considered.

In some embodiments, at least one anode electrode plate layer is configured as the first preset electrode plate layer, and a distance x12 between the first active substance layer of the at least one anode electrode plate layer and the first wall is greater than or equal to 2 mm.

In the above technical solution, by setting x12 ≥ 2 mm, the amount of the active substance is effectively reduced and the pulling effect on the pressure relief structure is effectively weakened, and meanwhile, the processing of configuring the anode electrode plate layer as the first preset electrode plate layer is facilitated.

In some embodiments, x12 ≤ 15 mm.

In the above technical solution, by setting x12 ≤ 15 mm, neither is the excessive waste of the anode electrode plate body caused, nor is the energy density of the battery cell excessively reduced, while the amount of the active substance of the battery cell proximal to the first wall is appropriately reduced to reduce the pulling effect on the pressure relief structure, so that the capacity and the cost of the battery cell are considered.

In some embodiments, a number of layers of the first preset electrode plate layer accounts for at least 16% of a total number of layers of the electrode plate layer.

In the above technical solution, by setting the number of layers of the first preset electrode plate layer accounting for at least 16% of the total number of layers of the electrode plate layer, the amount of the active substance of the battery cell proximal to the first wall is appropriately reduced, which is beneficial to effectively reducing the pulling effect on the pressure relief structure.

In some embodiments, a proportion of the number of layers of the first preset electrode plate layer to the total number of layers of the electrode plate layer does not exceed 50%.

In the above technical solution, by setting the proportion of the number of layers of the first preset electrode plate layer to the total number of layers of the electrode plate layers not exceeding 50%, the energy density of the battery cell is not excessively reduced to a certain extent while the pulling effect on the pressure relief structure is reduced, so that the use reliability and the capacity of the battery cell are considered.

In some embodiments, the proportion of the number of layers of the first preset electrode plate layer to the total number of layers of the electrode plate layer does not exceed 24%.

In the above technical solution, by setting the proportion of the number of layers of the first preset electrode plate layer to the total number of layers of the electrode plate layer not exceeding 24%, the energy density of the battery cell is further ensured not to be excessively reduced, while the pulling effect on the pressure relief structure is reduced, so that the use reliability and the capacity of the battery cell are considered.

In some embodiments, at least one electrode plate layer is configured as a second preset electrode plate layer, and a distance between the first active substance layer of the second preset electrode plate layer and the first wall is equal to a distance between the second active substance layer of the second preset electrode plate layer and the first wall.

In the above technical solution, the plurality of electrode plate layers include at least one first preset electrode plate layer and at least one second preset electrode plate layer, so that the energy density of the battery cell is not excessively reduced to a certain extent while the amount of the active substance of the battery cell proximal to the first wall is appropriately reduced to reduce the pulling effect on the pressure relief structure, so that the use reliability and the capacity of the battery cell are considered.

In some embodiments, a plurality of first preset electrode plate layers and a plurality of second preset electrode plate layers are alternately stacked one by one.

In the above technical solution, the plurality of first preset electrode plate layers and the plurality of second preset electrode plate layers are alternately arranged one by one, so that the distribution of the active substance of the battery cell proximal to the first wall is relatively balanced, which is beneficial to improving the overall expansion and deformation of the electrode assembly.

In some embodiments, all the cathode electrode plate layers are configured as the first preset electrode plate layer, and all the anode electrode plate layers are configured as the second preset electrode plate layer.

In the above technical solution, all the cathode electrode plate layers are configured as the first preset electrode plate layer, and all the anode electrode plate layers are configured as the second preset electrode plate layer, so that it is beneficial to achieving a design requirement that the coverage range of the active substance layer of the anode electrode plate layer is greater than the coverage range of the corresponding active substance layer of the cathode electrode plate layer in the battery cell while the amount of the active substance of the battery cell proximal to the first wall is appropriately reduced to reduce the pulling effect on the pressure relief structure, so as to maintain the good electrochemical performance of the battery cell.

In some embodiments, the electrode assembly is a stacked electrode assembly, and a stacking direction of the anode electrode plate layer and the cathode electrode plate layer in the electrode assembly is the first direction; or the electrode assembly is a wound electrode assembly, and an axial direction of the electrode assembly is perpendicular to the first direction.

In the above technical solutions, the electrode assembly is provided as a stacked structure or a wound structure, so that the battery cell can be conveniently provided with electrode assemblies of different structures according to actual needs, which is beneficial to improving the applicability of the battery cell.

In some embodiments, the housing is provided with two second walls disposed face-to-face in the first direction, the first wall is connected to the two second walls, and the second wall is a wall with a largest area in the housing.

In the above technical solution, the pressure relief structure is disposed on the first wall, where the first wall is not the wall with the largest area in the housing, so that the pressure relief structure is disposed on a smaller force-bearing surface of the housing, which can reduce the force applied on the pressure relief structure when the electrode assembly expands and deforms compared with disposing the pressure relief structure on the second wall, so that the risk that the pressure relief structure is pulled to be damaged or fail can be further reduced.

In some embodiments, the pressure relief structure and post terminals of the battery cell are separately disposed on walls on different sides of the housing.

In the above technical solution, the post terminal is connected to a tab of the electrode assembly, and there is a certain gap between the wall where the post terminal is located and the main body of the electrode assembly. The pressure relief structure and the post terminal are separately disposed on the walls on different sides of the housing, so that the distance between the pressure relief structure and the main body of the electrode assembly can be appropriately shortened to a certain extent; as a result, the distance between the pressure relief structure and the main body of the electrode assembly is not easily limited by the post terminal. During the thermal runaway of the battery cell, most of the discharge medium in the housing may directly flow from the edge of the main body of the electrode assembly toward the pressure relief structure, thereby shortening the path through which the discharge medium flows to the pressure relief structure and enabling the discharge medium to quickly flow to the pressure relief structure. As such, the time for the discharge medium to reach the pressure relief structure is shortened, and the timeliness of pressure relief of the battery cell is improved.

In some embodiments, the housing includes a housing body and a housing cover, at least one of both ends of the housing body in a second direction is open, the open end of the housing body is provided with the housing cover, the first wall is formed on the housing body, and the second direction is perpendicular to the first direction.

In the above technical solution, the first wall is formed on the housing body, so that the structure of the housing cover can be simplified, and meanwhile, this enables to shorten the distance between the pressure relief structure and the main body of the electrode assembly, thereby shortening the path through which the discharge medium flows to the pressure relief structure during pressure relief, shortening the time for the discharge medium to reach the pressure relief structure, and improving the timeliness of pressure relief of the battery cell.

In some embodiments, the pressure relief structure and the first wall are integrally formed; or the pressure relief structure and the first wall are separately provided, and the pressure relief structure is mounted on the first wall.

In the above technical solution, the pressure relief structure and the first wall are integrally formed, so that the pressure relief structure features a simple forming method, which can reduce the number of components consisting of the battery cell, and can simplify the structure of the battery cell and reduce the cost; the pressure relief structure and the first wall are configured as separate components, so that it is convenient to dispose the pressure relief structure on the housing, which has low generation difficulty and high efficiency, and can improve the production efficiency of the battery cell.

In a second aspect, an embodiment of the present application further provides a battery, including the battery cell described above.

In the above technical solution, the battery adopts the battery cell described above, and the battery cell has good use reliability, which is beneficial to improving the reliability of the battery.

In a third aspect, an embodiment of the present application provides an electric device, including the battery described above. The battery is used to provide electric energy.

In the above technical solution, the electric device adopts the battery described above and the battery has good reliability, which is beneficial to improving the reliability of the electric device.

### BRIEF DESCRIPTION OF THE DRAWINGS

The above and/or additional aspects and advantages of the present application will become apparent and readily understood from the description of embodiments in conjunction with the drawings below, in which:
FIG. 1 is a structural schematic view of a vehicle according to some embodiments of the present application;
FIG. 2 is an exploded view of a battery according to some embodiments of the present application;
FIG. 3 is a structural schematic view of a battery cell according to some embodiments of the present application, where a motor assembly is a wound electrode assembly;
FIG. 4 is a structural schematic view of a battery cell according to some embodiments of the present application;
FIG. 5 is a schematic view of a battery cell according to some embodiments of the present application, where an electrode assembly is a stacked electrode assembly;
FIG. 6 is a partial cross-sectional view of a battery cell according to some embodiments of the present application;
FIG. 7 is a cross-sectional view of a battery cell according to some embodiments of the present application; and
FIG. 8 is a cross-sectional view of a battery cell according to some embodiments of the present application.

Reference numerals:
electric device 1000, controller 300, motor 400,
battery 200, battery cell 100, case 101, first case 101a, second case 101b,
housing 1, first wall 11, score groove 11b, second wall 12, third wall 13, housing body 1a, housing cover 1b,
pressure relief structure 2, electrode assembly 3, electrode plate layer 30, electrode plate body 301, first active substance layer 302, second active substance layer 303,
first preset electrode plate layer 30a, second preset electrode plate layer 30b, straight zone 30c, cathode electrode plate layer 31, anode electrode plate layer 32, separator 33, and post terminal 4.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that dimensions of various components in the embodiments of the present application shown in the drawings are only exemplary and should not impose any limitation on the present application.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, nickel-metal hydride batteries, nickel-cadmium batteries, lead storage batteries, or the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are typically divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide a higher voltage and capacity. For example, the battery mentioned in the present application may be a battery module group, a battery pack, or the like. A battery module group generally includes a plurality of battery cells. The battery generally includes a case for encapsulating a plurality of battery cells or a plurality of battery module groups, and the case can prevent liquid or other foreign matters from affecting the charging or discharging of the battery cells. Certainly, the battery may alternatively not include a case.

Illustratively, a battery cell may typically include a housing, a battery cell assembly, and an electrolytic solution. The housing is configured to accommodate the battery cell assembly and the electrolytic solution, and at least one positive electrode post terminal and at least one negative electrode post terminal are disposed on the housing. The battery cell assembly includes one or a plurality of electrode assemblies, and the electrode assembly is formed by stacking or winding a positive electrode plate, a negative electrode plate, and a separator. The housing may be a steel housing, an aluminum housing, a plastic (such as polypropylene) housing, a composite metal housing (such as a copper-aluminum composite housing), an aluminum-plastic film, or the like.

The positive electrode plate may typically include a positive electrode plate body and a positive electrode active substance layer. The positive electrode active substance layer is directly or indirectly applied on the positive electrode plate body. The positive electrode plate body that is not coated with the positive electrode active substance layer is used as a positive electrode tab. A plurality of positive electrode tabs are stacked together and electrically connected to the positive electrode post terminal. Illustratively, the plurality of positive electrode tabs stacked together may be directly welded to the positive electrode post terminal to form an electrical connection. Alternatively, the battery cell assembly may further include a positive electrode adapting piece, the plurality of positive electrode tabs stacked together are welded to one end of the positive electrode adapting piece, and the other end of the positive electrode adapting piece is welded to the positive electrode post terminal to form an electrical connection between the positive electrode tabs and the positive electrode post terminal.

The negative electrode plate may typically include a negative electrode plate body and a negative electrode active substance layer. The negative electrode active substance layer is directly or indirectly applied on the negative electrode plate body. The negative electrode plate body that is not coated with the negative electrode active substance layer is used as a negative electrode tab. A plurality of negative electrode tabs are stacked together and electrically connected to the negative electrode post terminal. Illustratively, the plurality of negative electrode tabs stacked together may be directly welded to the negative electrode post terminal to form an electrical connection. Alternatively, the battery cell assembly may further include a negative electrode adapting piece, the plurality of negative electrode tabs stacked together are welded to one end of the negative electrode adapting piece, and the other end of the negative electrode adapting piece is welded to the negative electrode post terminal to form an electrical connection between the negative electrode tabs and the negative electrode post terminal. The material of the separator is not limited, and may be, e.g., polypropylene or polyethylene.

As for a pressure relief structure on the battery cell mentioned in the present application, when the internal pressure of the battery cell is too high (for example, due to overcharging and other reasons), the pressure relief structure is configured to release the gas inside the battery cell to reduce the internal pressure of the battery cell and prevent the battery cell from explosion and combustion due to excessively rapid pressurization inside the battery cell. For example, the pressure relief structure may be an anti-explosion valve, an anti-explosion sheet, or the like.

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

In the related art, a battery includes a plurality of battery cells, and the battery cells generate a large amount of heat during the continuous charging and discharging process. Generally, a pressure relief structure is disposed in the battery cell, and the pressure is relieved through the pressure relief structure during the thermal runaway of the battery cell.

When a battery cell is designed, considering the energy density of the battery, the spatial proportion of the electrode assembly of the battery cell in the shell needs to be as large as possible, so the distance between the electrode assembly and the housing wall where the pressure relief structure is located is relatively close to the distance between the electrode assembly and the housing wall opposite to the pressure relief structure. However, when the electrode assembly of the battery cell expands and deforms, the housing of the battery cell also deforms, resulting in a bulged housing. The pressure relief structure is usually disposed on the housing, so that the housing wall where the pressure relief structure is located is subjected to a pulling effect. When the pulling effect reaches a certain degree, the pressure relief structure is easily pulled and cracked, resulting in damage and failure of the pressure relief structure, thereby causing a decrease in the reliability of the battery cell. Therefore, the development of a more reliable battery system without heat spread has become a pursuit of battery manufacturers and vehicle manufacturers.

Based on the above consideration, to improve the reliability of the battery cell, a battery cell is provided, including a housing, a pressure relief structure, and an electrode assembly. The housing is provided with a first wall; the pressure relief structure is disposed on the first wall; the electrode assembly is disposed in the housing and includes a plurality of electrode plate layers stacked in a first direction. The plurality of electrode plate layers include cathode electrode plate layers and anode electrode plate layers; each electrode plate layer includes an electrode plate body, a first active substance layer, and a second active substance layer; the first active substance layer and the second active substance layer are disposed on both sides of the thickness of the electrode plate body, respectively; at least one electrode plate layer is configured as a first preset electrode plate layer; a distance x1 between the first active substance layer of the first preset electrode plate layer and the first wall is greater than a distance x2 between the second active substance layer of the first preset electrode plate layer and the first wall; the first direction is parallel to a plane where the first wall is located.

In the above technical solution, the at least one electrode plate layer is configured as the first preset electrode plate layer, the distance x1 between the first active substance layer of the first preset electrode plate layer and the first wall is greater than the distance x2 between the second active substance layer of the first preset electrode plate layer and the first wall, and the pressure relief structure is disposed on the first wall, so that the amount of the active substance of the battery cell proximal to the first wall is relatively small, and when the battery cell expands and deforms, it is beneficial to weakening the effect of a part of the housing proximal to the first wall on the first wall, and weakening the pulling effect of other walls of the housing on the pressure relief structure through the first wall, so that the probability of damage such as cracking of the pressure relief structure on the first wall can be reduced, and meanwhile, the probability of liquid leakage due to the cracking of the pressure relief structure can also be reduced to a certain extent, thereby improving the reliability of the battery cell.

An embodiment of the present application provides an electric device using the battery disclosed herein as a power source. The electric device may be, but is not limited to, a mobile phone, a tablet or laptop computer, an electric toy, an electric tool, an electric bike, an electric vehicle, a ship, a spacecraft, and the like. The electric toy may include a stationary or mobile electric toy, such as a game console, an electric vehicle toy, an electric ship toy, and an electric airplane toy, and the spacecraft may include an airplane, a rocket, a space shuttle, a spaceship, and the like.

For ease of explanation in the following embodiments, the structures of the electric device 1000, the battery 200, and the battery cell 100 of the present application are described in detail by taking the electric device 1000 as a vehicle as an example.

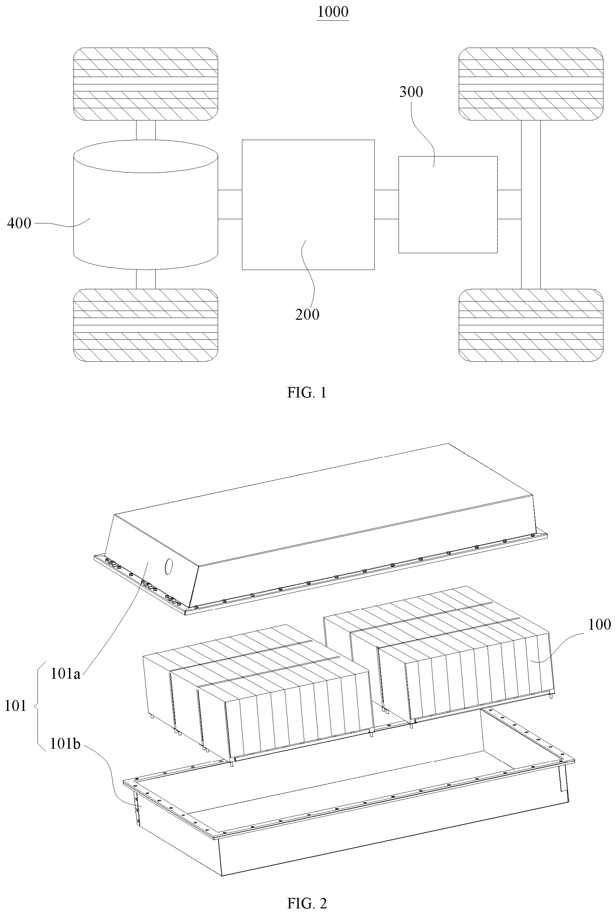

Referring to FIG. 1, FIG. 1 is a structural schematic view of a vehicle as an electric device 1000 according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 200 is arranged in the vehicle, and the battery 200 may be arranged at the bottom, head, or tail of the vehicle. The battery 200 may be configured to supply power to the vehicle. For example, the battery 200 may serve as an operation power source for the vehicle. The vehicle may further include a controller 300 and a motor 400. The controller 300 is configured to control the battery 200 to supply power to the motor 400, e.g., for operation power needed by the vehicle for start-up, navigation, and driving. In some embodiments of the present application, the battery 200 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of the structure of a battery 200 according to some embodiments of the present application. The battery 200 includes a case 101 and a plurality of battery cells 100, and the battery cells 100 are accommodated in the case 101. The case 101 is configured to provide an assembly space for the battery cells 100, and the case 101 may be in various structures. In some embodiments, the case 101 may include a first case 101a and a second case 101b. The first case 101a and the second case 101b are lidded with each other. The first case 101a and the second case 101b jointly define an accommodating cavity for accommodating the battery cells. The second case 101b may be of a hollow structure with one end open, the first case 101a may be of a plate structure, and the open side of the second case 101b is lidded with the first case 101a, such that the first case 101a and the second case 101b jointly define an accommodating cavity; or the first case 101a and the second case 101b may also both be of a hollow structure with one side open (for example, as shown in FIG. 2), and the open side of the second case 101b is lidded with the open side of the first case 101a. Certainly, the case 101 formed by the first case 101a and the second case 101b may be in various shapes, such as cylindrical or rectangular parallelepiped-shaped.

In the battery 200, the plurality of battery cells 100 may be connected in series, in parallel, or in series-parallel. The series-parallel connection means that both series connection and parallel connection are present for the connection among the plurality of battery cells 100. The plurality of battery cells 100 may be directly connected in series, in parallel, or in series-parallel, and then the whole formed by the plurality of battery cells 100 is accommodated in the case 101. Certainly, the battery 200 may also be in a form where the plurality of battery cells 100 are first connected in series, in parallel, or in series-parallel to give a battery module group, and then a plurality of battery module groups are connected in series, in parallel, or in series-parallel to form a whole and accommodated in the case 101. The battery 200 may further include other structures. For example, the battery 200 may further include a busbar for achieving the electrical connection between the plurality of battery cells 100.

In some embodiments, the case 101 may be a part of the chassis structure of the vehicle. For example, a part of the case 101 may be referred to as at least a part of the floor of the vehicle, or a part of the case 101 may be referred to as at least a part of the crossbeam and the longitudinal beam of the vehicle.

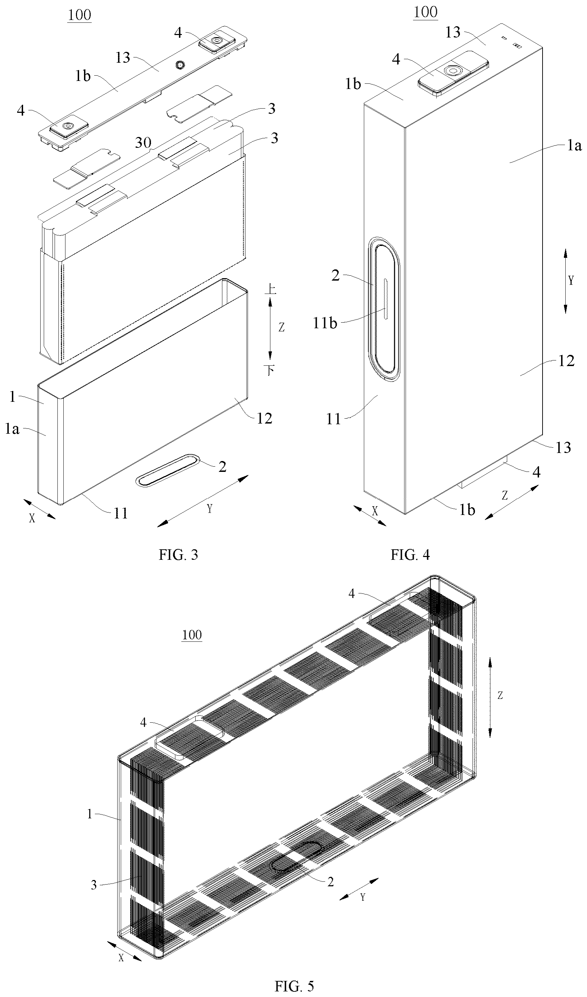

Referring to FIGs. 3 and 4, FIG. 3 is a structural schematic view of a battery cell according to some embodiments of the present application, and FIG. 4 is a structural schematic view of a battery cell according to some embodiments of the present application. The battery cell is substantially rectangular parallelepiped-shaped; the height direction of the battery cell is a third direction Z, the length direction of the battery cell is a second direction Y, and the thickness direction of the battery cell is a first direction X. The first direction X, the second direction Y, and the third direction Z are perpendicular to each other, which is, however, not limited thereto. In other embodiments of the present application, the battery cell may also be multi-prismatic, flat, or in other shapes.

Referring to FIGs. 3 to 5, in the embodiments of the present application, the battery cell 100 includes a housing 1 and a pressure relief structure 2, where the housing 1 is provided with a first wall 11, the pressure relief structure 2 is disposed on the first wall 11, and the pressure relief structure 2 is configured to be able to relieve the pressure inside the battery cell 100.

The battery cell 100 further includes an electrode assembly 3. The electrode assembly 3 is disposed in the housing 1. The electrode assembly 3 includes a plurality of electrode plate layers 30 stacked in a first direction. The plurality of electrode plate layers 30 include at least one cathode electrode plate layer 31 and at least one anode electrode plate layer 32. Each electrode plate layer 30 includes an electrode plate body 301, a first active substance layer 302, and a second active substance layer 303. The first active substance layer 302 and the second active substance layer 303 are disposed on both sides of the thickness of the electrode plate body 301, respectively. The first direction is parallel to a plane where the first wall 11 is located.

It may be understood that one electrode assembly 3 or a plurality of electrode assemblies 3 may be disposed in the housing 1, and each electrode assembly 3 includes a plurality of electrode plate layers 30 stacked in the first direction. It can be seen that the cathode electrode plate layer 31 includes a cathode electrode plate body, a first cathode active substance layer, and a second cathode active substance layer; the first cathode active substance layer and the second cathode active substance layer are disposed on both sides of the thickness of the cathode electrode plate body, respectively. Similarly, the anode electrode plate layer 32 includes an anode electrode plate body, a first anode active substance layer, and a second anode active substance layer; the first anode active substance layer and the second anode active substance layer are disposed on both sides of the thickness of the anode electrode plate body, respectively.

Illustratively, the electrode assembly 3 may be of a stacked structure, that is, the plurality of electrode plate layers 30 of the electrode assembly 3 are stacked, and the plurality of electrode plate layers 30 are stacked to form a straight zone 30c. In the straight zone 30c, at least a part of the cathode electrode plate layer 31 and the anode electrode plate layer 32 are stacked in the first direction, or at least a part of the anode electrode plate layer 32 and the cathode electrode plate layer 31 are stacked in the first direction. In this case, the expansion and deformation of the electrode assembly 3 is particularly obvious in the first direction. The electrode assembly 3 may also be of a wound structure, that is, the plurality of electrode plate layers 30 of the electrode assembly 3 are stacked, and wound and molded, and a straight zone 30c is formed. In the straight zone 30c, a part of the anode electrode plate (i.e., the anode electrode plate layer 32) and a part of the cathode electrode plate (i.e., the cathode electrode plate layer 31) are stacked in the first direction. For example, after being wound and molded, both the cathode electrode plate layer 31 and the anode electrode plate layer 32 may be penetrated by an axis extending in the first direction, and in this case, the expansion and deformation of the electrode assembly 3 are particularly obvious in the first direction.

Obviously, when the electrode assembly 3 expands, most of the expansion of the electrode assembly 3 acts on other walls of the housing 1 oppositely disposed in the first direction, and the first direction is parallel to the plane where the first wall 11 is located, so the first wall 11 is less affected by the expansion of the electrode assembly 3 than the other walls described above; the pressure relief structure 2 is disposed on the first wall 11, which is beneficial to reducing the risk of blockage or damage to the pressure relief structure 2 due to the expansion of the electrode assembly 3.

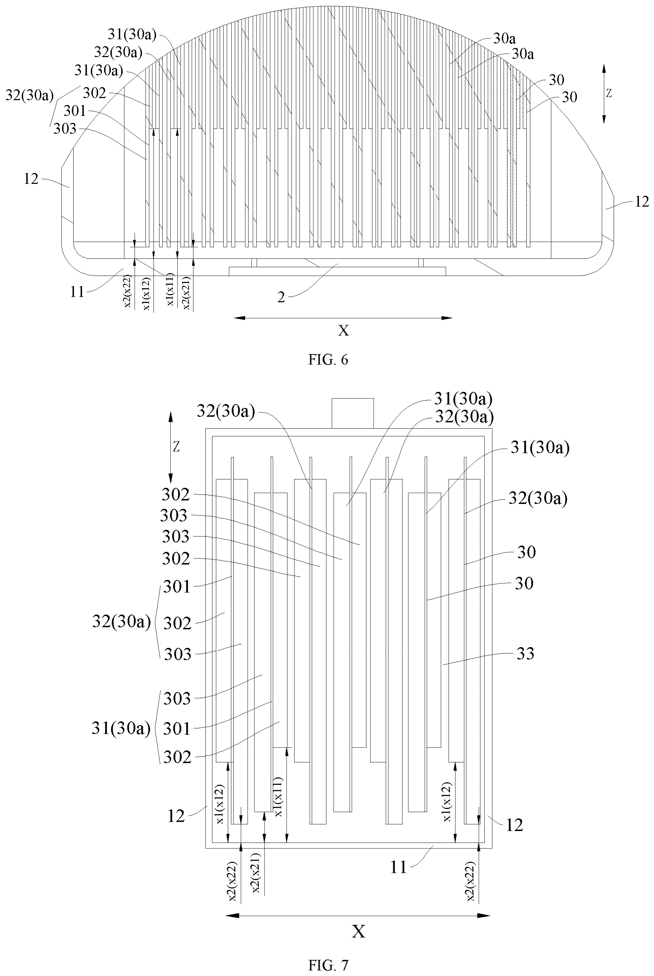

Referring to FIGs. 6 to 8, at least one electrode plate layer 30 is configured as a first preset electrode plate layer 30a, and then the number of the electrode plate layers 30 of the electrode assembly 3 is greater than or equal to the number of the first preset electrode plate layers 30a. The distance x1 between the first active substance layer 302 of the first preset electrode plate layer 30a and the first wall 11 is greater than the distance x2 between the second active substance layer 303 of the first preset electrode plate layer 30a and the first wall 11, and the pressure relief structure 2 is disposed on the first wall 11. Therefore, in a direction perpendicular to the first wall 11, the distance x1 between the first active substance layer 302 of the first preset electrode plate layer 30a and the pressure relief structure 2 is greater than the distance x2 between the second active substance layer 303 of the first preset electrode plate layer 30a and the pressure relief structure 2, so that during the subsequent cycles of the battery cell 100, the electrode assembly 3 applies an acting force on other walls of the housing 1 except the first wall 11 due to the obvious deformation caused by the rebound of the electrode plate layer 30, resulting in the deformation of the other walls of the housing 1. Because x1 > x2, the amount of the active substance of the battery cell 100 proximal to the first wall 11 is relatively small, which is beneficial to reducing the force applied on the parts of the other walls proximal to the first wall 11 and reducing the deformation of the parts of the other walls proximal to the first wall 11, thereby weakening the effect of the parts of the other walls proximal to the first wall 11 on the first wall 11, weakening the pulling effect of the parts of the other walls proximal to the first wall 11 on the pressure relief structure 2 through the first wall 11, and thus reducing the probability of damage such as cracking of the pressure relief structure 2 on the first wall 11 and improving the reliability of the battery cell 100.

In addition, the above arrangement in the embodiments of the present application can reduce the probability that the pressure relief structure 2 is pulled and broken, thereby reducing the probability of liquid leakage to a certain extent, and also improving the reliability of the battery cell 100.

Illustratively, the height direction of the battery cell 100 is the third direction Z, the length direction of the battery cell 100 is the second direction Y, and the thickness direction of the battery cell 100 is the first direction X. In the third direction Z, the distance x1 between the first active substance layer 302 of the first preset electrode plate layer 30a and the first wall 11 is greater than the distance x2 between the second active substance layer 303 of the first preset electrode plate layer 30a and the first wall 11. Taking the third direction Z being an up-down direction as an example, the first wall 11 is the bottom wall of the housing 1. By differently setting the dimensions of the first active substance layer 302 and the second active substance layer 303 on both sides of the thickness of the first preset electrode plate layer 30a in the up-down direction, the distances between the first active substance layer 302 and the second active substance layer 303 and the first wall 11 are not equal, which is beneficial to reducing the force applied on the lower part of the housing 1 caused by the expansion and deformation of the electrode assembly 3, thereby reducing the pulling effect on the pressure relief structure 2 on the bottom wall of the housing 1, and reducing the risk that the pressure relief structure 2 is pulled and cracked. In addition, the pressure relief structure 2 is disposed on the bottom wall of the housing 1, so that the battery cell 100 achieves a bottom spray design, which is beneficial to improving the heat spread of the battery 200. For example, the battery 200 is generally disposed at the bottom of the electric device, with an electric component or personnel above the battery. When thermal runaway occurs in the battery 200, the battery cell 100 can discharge gas downward for pressure relief, which can reduce the fire in the region above the battery 200, especially when there are a large number of battery cells 100, that is, reduce the loss of the electric component and reduce the injury to personnel. The use of this structure can reduce the impact of thermal runaway of the battery 200 on the electric device and improve the use reliability of the battery 200.

It may be understood that configuring the at least one electrode plate layer 30 as the first preset electrode plate layer 30a may include: configuring at least one cathode electrode plate layer 31 as the first preset electrode plate layer 30a; and/or configuring at least one anode electrode plate layer 32 as the first preset electrode plate layer 30a. Another electrode plate layer 30 that is not configured as the first preset electrode plate layer 30a may be configured as a second preset electrode plate layer 30b described below.

In the above technical solution, the at least one electrode plate layer 30 is configured as the first preset electrode plate layer 30a, the distance x1 between the first active substance layer 302 of the first preset electrode plate layer 30a and the first wall 11 is greater than the distance x2 between the second active substance layer 303 of the first preset electrode plate layer 30a and the first wall 11, and the pressure relief structure 2 is disposed on the first wall 11, so that the amount of the active substance of the battery cell 100 proximal to the first wall 11 is relatively small, and when the battery cell 100 expands and deforms, it is beneficial to weakening the effect of the part of the housing 1 proximal to the first wall 11 on the first wall 11, and weakening the pulling effect of other walls of the housing 1 on the pressure relief structure 2 through the first wall 11, so that the probability of damage such as cracking of the pressure relief structure 2 on the first wall 11 can be reduced, and meanwhile, the probability of liquid leakage due to the cracking of the pressure relief structure 2 can also be reduced to a certain extent, thereby improving the reliability of the battery cell 100.

Referring to FIGs. 6 to 8, in some embodiments, at least one cathode electrode plate layer 31 is configured as the first preset electrode plate layer 30a, and then the number of the cathode electrode plate layers 31 of the electrode assembly 3 is greater than or equal to the number of the cathode electrode plate layers 31 configured as the first preset electrode plate layer 30a. A single cathode electrode plate layer 31 configured as the first preset electrode plate layer 30a includes a cathode electrode plate body, and a first active substance layer 302 and a second active substance layer 303 that are disposed on both sides of the thickness of the cathode electrode plate body, and a distance x11 between the first active substance layer 302 and the first wall 11 is greater than a distance x21 between the second active substance layer 303 and the first wall 11.

In the above technical solution, the at least one cathode electrode plate layer 31 is configured as the first preset electrode plate layer 30a, so that the amount of the active substance of the battery cell 100 proximal to the first wall 11 is reduced on the at least one cathode electrode plate layer 31. As a result, the accommodation capacity of the electrode assembly 3 for lithium ions can be better considered when the battery cell 100 is a lithium battery while the risk of pulling damage of the pressure relief structure 2 on the first wall 11 is reduced, which is beneficial to achieving a design requirement that the coverage range of the active substance layer of the anode electrode plate layer 32 is greater than the coverage range of the corresponding active substance layer of the cathode electrode plate layer 31 in the battery cell 100, so as to maintain the good electrochemical performance of the battery cell 100.

It may be understood that in the above solution, when the at least one cathode electrode plate layer 31 is configured as the first preset electrode plate layer 30a, the arrangement of the anode electrode plate layer 32 may include the following various implementations: 1. None of the anode electrode plate layers 32 in the plurality of electrode plate layers 30 is configured as the first preset electrode plate layer 30a; 2. At least one anode electrode plate layer 32 is configured as the first preset electrode plate layer 30a. In the above first implementation, the anode electrode plate layer 32 configured as the first preset electrode plate layer 30a and the cathode electrode plate layer 31 configured as the first preset electrode plate layer 30a may be disposed adjacent to each other, or at least one other electrode plate layer 30 may be disposed between the anode electrode plate layer 32 configured as the first preset electrode plate layer 30a and the cathode electrode plate layer 31 configured as the first preset electrode plate layer 30a.

In a further embodiment of the present application, all the cathode electrode plate layers 31 in the plurality of electrode plate layers 30 are configured as the first preset electrode plate layer 30a.

In the above technical solution, all the cathode electrode plate layers 31 in the plurality of electrode plate layers 30 are configured as the first preset electrode plate layer 30a, so as to further reduce the amount of the active substance of the battery cell 100 proximal to the first wall 11, which is beneficial to further reducing the pulling effect on the pressure relief structure 2 on the first wall 11, thereby further improving the reliability of the battery cell 100.

Referring to FIGs. 6 and 7, in some embodiments, at least one anode electrode plate layer 32 is configured as the first preset electrode plate layer 30a, and the cathode electrode plate layer 31 adjacent to at least a part of the anode electrode plate layer 32 configured as the first preset electrode plate layer 30a is also configured as the first preset electrode plate layer 30a. The number of the anode electrode plate layers 32 of the electrode assembly 3 is greater than or equal to the number of the anode electrode plate layers 32 configured as the first preset electrode plate layer 30a. A single anode electrode plate layer 32 configured as the first preset electrode plate layer 30a includes an anode electrode plate body, and a first active substance layer 302 and a second active substance layer 303 that are disposed on both sides of the thickness of the anode electrode plate body, and the distance x12 between the first active substance layer 302 and the first wall 11 is greater than the distance x22 between the second active substance layer 303 and the first wall 11.

Illustratively, there are n anode electrode plate layers 32 of the electrode assembly 3, which are a first anode electrode plate layer 32, a second anode electrode plate layer 32, ..., and an n-th anode electrode plate layer 32, respectively, in the first direction, where n is a positive integer. If the first anode electrode plate layer 32 to the (n-m)-th anode electrode plate layer 32 are each configured as the first preset electrode plate layer 30a, the cathode electrode plate layer 31 adjacent to at least one anode electrode plate layer 32 in the first anode electrode plate layer 32 to the (n-m)-th anode electrode plate layer 32 is also configured as the first preset electrode plate layer 30a, where m is an integer and 0 ≤ m < n. Certainly, in other examples, when a plurality of anode electrode plate layers 32 are configured as the first preset electrode plate layer 30a, one cathode electrode plate layer 31 is disposed between any two adjacent anode electrode plate layers 32 in the plurality of anode electrode plate layers 32 that are configured as the first preset electrode plate layer 30a; or, at least one other anode electrode plate layer 32 layer that is not configured as the first preset electrode plate layer 30a and a plurality of cathode electrode plate layers 31 are separately disposed between at least two adjacent anode electrode plate layers 32 in the plurality of anode electrode plate layers 32 that are configured as the first preset electrode plate layer 30a, and at least two outermost cathode electrode plate layers 31 in the plurality of cathode electrode plate layers 31 in the first direction are also configured as the first preset electrode plate layer 30a.

It may be understood that for a single anode electrode plate layer 32 configured as the first preset electrode plate layer 30a, there may be one or two cathode electrode plate layers 31 adjacent to the anode electrode plate layer 32. As long as the cathode electrode plate layer 31 is adjacent to the anode electrode plate layer 32, the cathode electrode plate layer 31 is configured as the first preset electrode plate layer 30a.

In the above technical solution, the at least one anode electrode plate layer 32 is configured as the first preset electrode plate layer 30a, and the cathode electrode plate layer 31 adjacent to at least the part of the anode electrode plate layer 32 configured as the first preset electrode plate layer 30a is also configured as the first preset electrode plate layer 30a, so that when the amount of the active substance of the battery cell 100 proximal to the first wall 11 is reduced on the at least one anode electrode plate layer 32, the amount of the active substance is also correspondingly reduced on the cathode electrode plate layer 31 adjacent to at least the part of the anode electrode plate layer 32 configured as the first preset electrode plate layer 30a. As a result, the accommodation capacity of the electrode assembly 3 for lithium ions can be better considered when the battery cell 100 is a lithium battery 200 while the risk of pulling damage of the pressure relief structure 2 on the first wall 11 is reduced, which is beneficial to achieving a design requirement that the coverage range of the active substance layer of the anode electrode plate layer 32 is greater than the coverage range of the corresponding active substance layer of the cathode electrode plate layer 31 in the battery cell 100, so as to maintain the good electrochemical performance of the battery cell 100.

For example, in the example in the figure, for the anode electrode plate layer 32 and the cathode electrode plate layer 31 that are adjacent to each other, if the two layers are each configured as the first preset electrode plate layer 30a, the first active substance layer 302 of the anode electrode plate layer 32 is disposed on a side, facing the cathode electrode plate layer 31, of the anode electrode plate body, and the first active substance layer 302 of the cathode electrode plate layer 31 is disposed on a side, facing the anode electrode plate layer 32, of the cathode electrode plate body; or the second active substance layer 303 of the anode electrode plate layer 32 is disposed on a side, facing the cathode electrode plate layer 31, of the anode electrode plate body, and the second active substance layer 303 of the cathode electrode plate layer 31 is disposed on a side, facing the anode electrode plate layer 32, of the cathode electrode plate body.

In a further embodiment of the present application, all the electrode plate layers 30 are configured as the first preset electrode plate layer 30a.

In the above technical solution, all the electrode plate layers 30 are configured as the first preset electrode plate layer 30a, so as to further reduce the amount of the active substance of the battery cell 100 proximal to the first wall 11, which is beneficial to further reducing the pulling effect on the pressure relief structure 2 on the first wall 11, thereby further improving the reliability of the battery cell 100.

Referring to FIGs. 6 and 7, in some embodiments, the cathode electrode plate layer 31 and the anode electrode plate layer 32 adjacent to each other are each configured as the first preset electrode plate layer 30a, and in the cathode electrode plate layer 31 and the anode electrode plate layer 32 adjacent to each other, the first active substance layer 302 of the cathode electrode plate layer 31 and the first active substance layer 302 of the anode electrode plate layer 32 are disposed face-to-face or back-to-back.

It can be seen that in the above solution, for the anode electrode plate layer 32 and the cathode electrode plate layer 31 that are disposed adjacent to each other and both configured as the first preset electrode plate layer 30a, the arrangement methods include the following various types: 1. The first active substance layer 302 of the anode electrode plate layer 32 is disposed on a side, facing the cathode electrode plate layer 31, of the anode electrode plate body, and the first active substance layer 302 of the cathode electrode plate layer 31 is disposed on a side, facing the anode electrode plate layer 32, of the cathode electrode plate body; in this case, the first active substance layer 302 of the cathode electrode plate layer 31 and the first active substance layer 302 of the anode electrode plate layer 32 are disposed face-to-face. 2. The first active substance layer 302 of the anode electrode plate layer 32 is disposed on a side, facing away from the cathode electrode plate layer 31, of the anode electrode plate body, and the first active substance layer 302 of the cathode electrode plate layer 31 is disposed on a side, facing away from the anode electrode plate layer 32, of the cathode electrode plate body; in this case and in this case, the first active substance layer 302 of the cathode electrode plate layer 31 and the first active substance layer 302 of the anode electrode plate layer 32 are disposed back-to-back.

In the above technical solution, in the cathode electrode plate layer 31 and the anode electrode plate layer 32 that are disposed adjacent to each other and both configured as the first preset electrode plate layer 30a, the first active substance layer 302 of the cathode electrode plate layer 31 and the first active substance layer 302 of the anode electrode plate layer 32 are disposed face-to-face or back-to-back, so that the coverage ranges of the active substance layers on the opposite sides of the cathode electrode plate layer 31 and the anode electrode plate layer 32 that are disposed adjacent to each other match, which is beneficial to achieving a design requirement that the coverage range of the active substance layer of the anode electrode plate layer 32 is greater than the coverage range of the corresponding active substance layer of the cathode electrode plate layer 31 in the battery cell 100 while the risk of pulling damage of the pressure relief structure 2 on the first wall 11 is reduced, so as to maintain the good electrochemical performance of the battery cell 100.

Referring to FIGs. 6 and 7, in some embodiments, at least one anode electrode plate layer 32 and two cathode electrode plate layers 31 adjacent thereto are configured as the first preset electrode plate layer 30a, respectively, the first active substance layer 302 of the at least one anode electrode plate layer 32 and the first active substance layer 302 of one of the adjacent cathode electrode plate layers 31 are disposed face-to-face, and the second active substance layer 303 of the at least one anode electrode plate layer 32 and the second active substance layer 303 of the other one of the adjacent cathode electrode plate layers 31 are disposed face-to-face.

It can be seen that in the above solution, for a single anode electrode plate layer 32 configured as the first preset electrode plate layer 30a, the first active substance layer 302 of the anode electrode plate layer 32 is disposed on a side, facing one of the two cathode electrode plate layers 31 adjacent to the anode electrode plate layer, of the anode electrode plate body, and the second active substance layer 303 of the anode electrode plate layer 32 is disposed on a side, facing the other one of the two cathode electrode plate layers 31 adjacent to the anode electrode plate layer, of the anode electrode plate body. Then, the first active substance layer 302 of the one of the two cathode electrode plate layers 31 adjacent to the anode electrode plate layer 32 is disposed on a side, facing the anode electrode plate layer 32, of the cathode electrode plate body, and the second active substance layer 303 of the other one of the two cathode electrode plate layers 31 adjacent to the anode electrode plate layer 32 is disposed on a side, facing the anode electrode plate layer 32, of the cathode electrode plate body.

Illustratively, taking the first direction being a left-right direction as an example, for a single anode electrode plate layer 32 configured as the first preset electrode plate layer 30a, adjacent cathode electrode plate layers 31 are disposed on left and right sides of the single anode electrode plate layer, respectively. If the first active substance layer 302 of the anode electrode plate layer 32 is disposed on the left side of the anode electrode plate body, and the second active substance layer 303 is disposed on the right side of the anode electrode plate body, then the first active substance layer 302 of the cathode electrode plate layer 31 on the left side is disposed on the right side of the cathode electrode plate body, and the second active substance layer 303 of the cathode electrode plate layer 31 on the right side is disposed on the left side of the cathode electrode plate body.

In the above technical solution, the first active substance layer 302 and the second active substance layer 303 of the anode electrode plate layer 32 configured as the first preset electrode plate layer 30a correspond to the first active substance layer 302 and the second active substance layer 303 of the cathode electrode plate layer 31 adjacent to the anode electrode plate layer face-to-face, respectively, so that the coverage ranges of the active substance layers on the opposite sides of the cathode electrode plate layer 31 and the anode electrode plate layer 32 that are disposed adjacent to each other match, which is beneficial to achieving a design requirement that the coverage range of the active substance layer of the anode electrode plate layer 32 is greater than the coverage range of the corresponding active substance layer of the cathode electrode plate layer 31 in the battery cell 100 while the risk of pulling damage of the pressure relief structure 2 on the first wall 11 is reduced, so as to maintain the good electrochemical performance of the battery cell 100.

It may be understood that in the embodiments of the present application, the distance between the active substance layer on a side, facing the cathode electrode plate layer 31, of the anode electrode plate layer 32 and the first wall 11 is less than the distance between the active substance layer on a side, facing the anode electrode plate layer 32, of the cathode electrode plate layer 31 and the first wall 11. Illustratively, taking the first direction being a left-right direction as an example, for a single anode electrode plate layer 32 configured as the first preset electrode plate layer 30a, adjacent cathode electrode plate layers 31 are disposed on left and right sides of the single anode electrode plate layer, respectively. If the first active substance layer 302 of the anode electrode plate layer 32 is disposed on the right side of the anode electrode plate body, and the second active substance layer 303 is disposed on the left side of the anode electrode plate body, then the second active substance layer 303 of the cathode electrode plate layer 31 on the left side is disposed on the right side of the cathode electrode plate body thereof, and the first active substance layer 302 of the cathode electrode plate layer 31 on the right side is disposed on the left side of the cathode electrode plate body thereof; the distance between the second active substance layer 303 of the cathode electrode plate layer 31 on the left side and the first wall 11 is greater than the distance between the second active substance layer 303 of the anode electrode plate layer 32 and the first wall 11, and the distance between the first active substance layer 302 of the cathode electrode plate layer 31 on the right side and the first wall 11 is greater than the distance between the first active substance layer 302 of the anode electrode plate layer 32 and the first wall 11.

Referring to FIGs. 6 to 8, in some embodiments, x1 - x2 ≥ 2 mm.

Illustratively, for the cathode electrode plate layer 31 configured as the first preset electrode plate layer 30a, the distance x11 between the first active substance layer 302 of the cathode electrode plate layer 31 and the first wall 11 is greater than the distance x21 between the second active substance layer 303 of the cathode electrode plate layer 31 and the first wall 11, and x11 - x21 ≥ 2 mm. For the anode electrode plate layer 32 configured as the first preset electrode plate layer 30a, the distance x12 between the first active substance layer 302 of the anode electrode plate layer 32 and the first wall 11 is greater than the distance x22 between the second active substance layer 303 of the cathode electrode plate layer 31 and the first wall 11, and x12 - x22 ≥ 2 mm.

Optionally, x1 - x2 may be 2 mm, 3 mm, 5 mm, 6 mm, 8 mm, 9 mm, 11 mm, 12 mm, 13 mm, or the like.

In the above technical solution, by setting x1 - x2 ≥ 2 mm, the energy density of the battery cell 100 is not excessively reduced to a certain extent while the amount of the active substance of the battery cell 100 proximal to the first wall 11 is appropriately reduced to reduce the pulling effect on the pressure relief structure 2, so that the use reliability and the capacity of the battery cell 100 are considered, and the processing of the first preset electrode plate layer 30a is also facilitated.

Further, x1 - x2 ≤ 12 mm. For example, x1 - x2 may be 4 mm, 4.5 mm, 7 mm, 10 mm, 10.5 mm, or 11.5 mm.

In the above technical solution, by setting x1 - x2 ≤ 12 mm, both the use reliability and the capacity of the battery cell 100 are further considered.

Illustratively, for the cathode electrode plate layer 31 configured as the first preset electrode plate layer 30a, the distance x11 between the first active substance layer 302 of the cathode electrode plate layer 31 and the first wall 11 is greater than the distance x21 between the second active substance layer 303 of the cathode electrode plate layer 31 and the first wall 11, and x11 - x21 ≤ 12 mm. For the anode electrode plate layer 32 configured as the first preset electrode plate layer 30a, the distance x12 between the first active substance layer 302 of the anode electrode plate layer 32 and the first wall 11 is greater than the distance x22 between the second active substance layer 303 of the cathode electrode plate layer 31 and the first wall 11, and x12 - x22 ≤ 12 mm.

Referring to FIGs. 6 to 8, in some embodiments, at least one cathode electrode plate layer 31 is configured as the first preset electrode plate layer 30a, and the distance x11 between the first active substance layer 302 of the at least one cathode electrode plate layer 31 and the first wall 11 is greater than or equal to 3 mm. In other words, the distance x11 between the first active substance layer 302 of the cathode electrode plate layer 31 configured as the first preset electrode plate layer 30a and the first wall 11 is greater than or equal to 3 mm.

Optionally, x11 may be 3 mm, 5 mm, 6 mm, 8 mm, 11 mm, 12 mm, 15 mm, 16 mm, 18 mm, or the like.

In the above technical solution, by setting x11 ≥ 3 mm, the amount of the active substance is effectively reduced and the pulling effect on the pressure relief structure 2 is effectively weakened, and meanwhile, the processing of configuring the cathode electrode plate layer 31 as the first preset electrode plate layer 30a is facilitated.

Further, x11 ≤ 17 mm. For example, x11 may be 3.5 mm, 4 mm, 7 mm, 9 mm, 10 mm, 13 mm, 14 mm, 17 mm, or the like.

In the above technical solution, by setting x11 ≤ 17 mm, neither is the excessive waste of the cathode electrode plate body caused, nor is the energy density of the battery cell 100 excessively reduced, while the amount of the active substance of the battery cell 100 proximal to the first wall 11 is appropriately reduced to reduce the pulling effect on the pressure relief structure 2, so that the capacity and the cost of the battery cell 100 are considered.

Referring to FIGs. 6 and 7, in some embodiments, at least one anode electrode plate layer 32 is configured as the first preset electrode plate layer 30a, and the distance x12 between the first active substance layer 302 of the at least one anode electrode plate layer 32 and the first wall 11 is greater than or equal to 2 mm. In other words, the distance x12 between the first active substance layer 302 of the anode electrode plate layer 32 configured as the first preset electrode plate layer 30a and the first wall 11 is greater than or equal to 2 mm.

Optionally, x12 is 2 mm, 4 mm, 5 mm, 7 mm, 9 mm, 10 mm, 12 mm, 13 mm, 15 mm, 16 mm, or the like.

In the above technical solution, by setting x12 ≥ 2 mm, the amount of the active substance is effectively reduced and the pulling effect on the pressure relief structure 2 is effectively weakened, and meanwhile, the processing of configuring the anode electrode plate layer 32 as the first preset electrode plate layer 30a is facilitated.

Further, x12 ≤ 15 mm. For example, x12 may be 2.5 mm, 3 mm, 6 mm, 8 mm, 11 mm, 14 mm, or the like.

In the above technical solution, by setting x12 ≤ 15 mm, neither is the excessive waste of the anode electrode plate body caused, nor is the energy density of the battery cell 100 excessively reduced, while the amount of the active substance of the battery cell 100 proximal to the first wall 11 is appropriately reduced to reduce the pulling effect on the pressure relief structure 2, so that the capacity and the cost of the battery cell 100 are considered.

Referring to FIGs. 6 to 8, in some embodiments, the number of layers of the first preset electrode plate layer 30a accounts for at least 16% of the total number of layers of the electrode plate layer 30. That is, the ratio of the number of layers of the first preset electrode plate layer 30a to the total number of layers of the electrode plate layer 30 of the electrode assembly 3 is greater than or equal to 16%.

In the above technical solution, by setting the number of layers of the first preset electrode plate layer 30a accounting for at least 16% of the total number of layers of the electrode plate layer 30, the amount of the active substance of the battery cell 100 proximal to the first wall 11 is appropriately reduced, which is beneficial to effectively reducing the pulling effect on the pressure relief structure 2.

Illustratively, the ratio of the number of layers of the first preset electrode plate layer 30a to the total number of layers of the electrode plate layer 30 is 16%, 20%, 23%, 25%, 28%, 30%, 35%, 40%, 45%, 50%, 55%, or the like.

In some embodiments, the proportion of the number of layers of the first preset electrode plate layer 30a to the total number of layers of the electrode plate layer 30 does not exceed 50%, that is, the ratio of the number of layers of the first preset electrode plate layer 30a to the total number of layers of the electrode plate layer 30 of the electrode assembly 3 is less than or equal to 50%.

In the above technical solution, by setting the proportion of the number of layers of the first preset electrode plate layer 30a to the total number of layers of the electrode plate layer 30 not exceeding 50%, the energy density of the battery cell 100 is not excessively reduced to a certain extent while the pulling effect on the pressure relief structure 2 is reduced, so that the use reliability and the capacity of the battery cell 100 are considered. Illustratively, the ratio of the number of layers of the first preset electrode plate layer 30a to the total number of layers of the electrode plate layer 30 is 17%, 22%, 26%, 29%, 33%, 37%, 42%, 48%, or the like.

Further, the proportion of the number of layers of the first preset electrode plate layer 30a to the total number of layers of the electrode plate layer 30 does not exceed 24%, that is, the ratio of the number of layers of the first preset electrode plate layer 30a to the total number of layers of the electrode plate layer 30 of the electrode assembly 3 is less than or equal to 24%.

In the above technical solution, by setting the proportion of the number of layers of the first preset electrode plate layer 30a to the total number of layers of the electrode plate layer 30 not exceeding 24%, the energy density of the battery cell 100 is further ensured not to be excessively reduced, while the pulling effect on the pressure relief structure 2 is reduced, so that the use reliability and the capacity of the battery cell 100 are considered. Illustratively, the ratio of the number of layers of the first preset electrode plate layer 30a to the total number of layers of the electrode plate layer 30 is 18%, 19%, 21%, 24%, or the like.

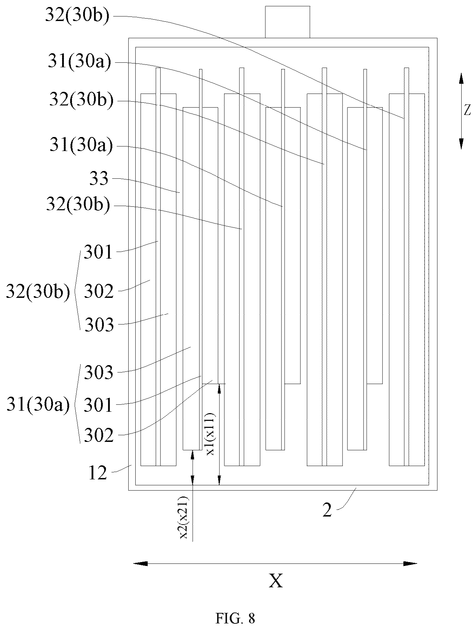

Referring to FIG. 8, in some embodiments, at least one electrode plate layer 30 is configured as a second preset electrode plate layer 30b, and the number of the electrode plate layers 30 of the electrode assembly 3 is greater than or equal to the sum of the number of layers of the first preset electrode plate layer 30a and the number of layers of the second preset electrode plate layer 30b; the distance between the first active substance layer 302 of the second preset electrode plate layer 30b and the first wall 11 is equal to the distance between the second active substance layer 303 of the second preset electrode plate layer 30b and the first wall 11.

In the above technical solution, the plurality of electrode plate layers 30 include at least one first preset electrode plate layer 30a and at least one second preset electrode plate layer 30b, so that the energy density of the battery cell 100 is not excessively reduced to a certain extent while the amount of the active substance of the battery cell 100 proximal to the first wall 11 is appropriately reduced to reduce the pulling effect on the pressure relief structure 2, so that the use reliability and the capacity of the battery cell 100 are considered.

It may be understood that configuring the at least one electrode plate layer 30 as the second preset electrode plate layer 30b may include: configuring at least one cathode electrode plate layer 31 as the second preset electrode plate layer 30b; and/or configuring at least one anode electrode plate layer 32 as the second preset electrode plate layer 30b.

Referring to FIG. 8, in some embodiments, a plurality of first preset electrode plate layers 30a and a plurality of second preset electrode plate layers 30b are alternately stacked one by one, a second preset electrode plate layer 30b is disposed between two adjacent first preset electrode plate layers 30a, and a first preset electrode plate layer 30a is disposed between two adjacent second preset electrode plate layers 30b.

In the above technical solution, the plurality of first preset electrode plate layers 30a and the plurality of second preset electrode plate layers 30b are alternately arranged one by one, so that the distribution of the active substance of the battery cell 100 proximal to the first wall 11 is relatively balanced, which is beneficial to improving the overall expansion and deformation of the electrode assembly 3.

Referring to FIG. 8, in some embodiments, all the cathode electrode plate layers 31 are configured as the first preset electrode plate layer 30a, and all the anode electrode plate layers 32 are configured as the second preset electrode plate layer 30b.

In the above technical solution, all the cathode electrode plate layers 31 are configured as the first preset electrode plate layer 30a, and all the anode electrode plate layers 32 are configured as the second preset electrode plate layer 30b, so that it is beneficial to achieving a design requirement that the coverage range of the active substance layer of the anode electrode plate layer 32 is greater than the coverage range of the corresponding active substance layer of the cathode electrode plate layer 31 in the battery cell 100 while the amount of the active substance of the battery cell 100 proximal to the first wall 11 is appropriately reduced to reduce the pulling effect on the pressure relief structure 2, so as to maintain the good electrochemical performance of the battery cell 100.

In some embodiments, the electrode assembly 3 is a stacked electrode assembly, and the stacking direction of the anode electrode plate layer 32 and the cathode electrode plate layer 31 in the electrode assembly 3 is the first direction; or the electrode assembly 3 is a wound electrode assembly, and the axial direction of the electrode assembly 3 is perpendicular to the first direction. In the above technical solution, the electrode assembly 3 is provided as a stacked structure or a wound structure, so that the battery cell 100 can be conveniently provided with electrode assemblies 3 of different structures according to actual needs, which is beneficial to improving the applicability of the battery cell 100.

As an example, there are a plurality of anode electrode plate layers 32 and a plurality of cathode electrode plate layers 31, respectively, and the plurality of anode electrode plate layers 32 and the plurality of cathode electrode plate layers 31 are alternately stacked. As an example, there are a plurality of cathode electrode plate layers 31. The anode electrode plate is folded to form a plurality of anode electrode plate layers 32 that are stacked, and a cathode electrode plate layer 31 is clamped between adjacent anode electrode plate layers 32. As an example, the anode electrode plate is folded to form a plurality of anode electrode plate layers 32 that are stacked, and the cathode electrode plate is folded to form a plurality of cathode electrode plate layers 31 that are stacked. As an example, a plurality of separators may be provided, and each of the separators is separately disposed between any adjacent anode electrode plate layer 32 and cathode electrode plate layer 31. As an example, the separator may be continuously disposed between any adjacent anode electrode plate layer 32 and cathode electrode plate layer 31 in a folded or wound manner. For example, for a stacked electrode assembly, the separator may extend in a substantially serpentine shape.

Referring to FIGs. 3 and 4, in some embodiments, the housing 1 is provided with two second walls 12 disposed face-to-face in the first direction; the first wall 11 is connected to the two second walls 12; the second wall 12 is a wall with the largest area in the housing 1, and then the second wall 12 may be understood as a "large surface" of the housing 1.

It can be seen that the first wall 11 is a narrow-surfaced housing wall connected between the two second walls 12. After the electrode assembly 3 is mounted in the housing 1, the second wall 12 is opposite to the straight zone 30c of the electrode assembly 3. When the internal pressure of the housing 1 reaches a certain value, the pressure relief structure 2 achieves pressure relief.

When the electrode assembly 3 expands, the electrode assembly 3 presses against the second wall 12 to support the housing 1 toward the outside of the housing 1 in the first direction, so that the housing 1 is deformed. The second wall 12 is a main force-bearing surface and is deformed greatly, and the first wall 11 bears less force than the second wall 12. Therefore, the pressure relief structure 2 is disposed on the first wall 11, so that the pressure relief structure 2 is disposed on a smaller force-bearing surface of the housing 1, which can reduce the force applied on the pressure relief structure 2 compared with disposing the pressure relief structure 2 on the second wall 12, so that the risk that the pressure relief structure 2 is pulled to be damaged or fail can be further reduced.

In the above technical solution, the pressure relief structure 2 is disposed on the first wall 11, where the first wall 11 is not the wall with the largest area in the housing 1, so that the pressure relief structure 2 is disposed on a smaller force-bearing surface of the housing 1, which can reduce the force applied on the pressure relief structure 2 when the electrode assembly 3 expands and deforms compared with disposing the pressure relief structure 2 on the second wall 12, so that the risk that the pressure relief structure 2 is pulled to be damaged or fail can be further reduced.

Referring to FIGs. 3 and 4, in some embodiments, the pressure relief structure 2 and post terminals 4 of the battery cell 100 are separately disposed on the walls on different sides of the housing 1, that is, the post terminal 4 is disposed on other walls of the housing 1 except the first wall 11.

In the above technical solution, the post terminal 4 is connected to a tab of the electrode assembly 3, and there is a certain gap between the wall where the post terminal 4 is located and the main body of the electrode assembly 3. The pressure relief structure 2 and the post terminal 4 are separately disposed on the walls on different sides of the housing 1, so that the distance between the pressure relief structure 2 and the main body of the electrode assembly 3 can be appropriately shortened to a certain extent; as a result, the distance between the pressure relief structure 2 and the main body of the electrode assembly 3 is not easily limited by the post terminal 4. During the thermal runaway of the battery cell 100, most of the discharge medium in the housing 1 may directly flow from the edge of the main body of the electrode assembly 3 toward the pressure relief structure 2, thereby shortening the path through which the discharge medium flows to the pressure relief structure 2 and enabling the discharge medium to quickly flow to the pressure relief structure 2. As such, the time for the discharge medium to reach the pressure relief structure 2 is shortened, and the timeliness of pressure relief of the battery cell 100 is improved.

In some embodiments, the housing 1 is further provided with second walls 12 and third walls 13. The second wall 12 is disposed adjacent to and connected to the first wall 11. The post terminal 4 is disposed on the third wall 13. The third wall 13 is separately disposed adjacent to and connected to the first wall 11 and the second wall 12. Alternatively, the third wall 13 is disposed adjacent to and connected to the second wall 12, and the third wall 13 and the first wall 11 are disposed face-to-face.

Illustratively, the housing 1 includes a housing body 1a and housing covers 1b. Both ends of the housing body 1a in the second direction are open, respectively. The open ends of the housing body 1a are provided with the housing covers 1b. The first wall 11 and the second wall 12 are both formed on the housing body 1a. At least one of the two housing covers 1b is formed as the third wall 13. In this case, the third wall 13 is separately disposed adjacent to and connected to the first wall 11 and the second wall 12. One of both ends of the housing body 1a in the second direction is open. The housing cover 1b is disposed at the open end of the housing 1a. The housing cover 1b is formed as the third wall 13, and the housing cover 1b is opposite to the first wall 11 in the second direction.

In some embodiments, the housing 1 includes a housing body 1a and a housing cover 1b, at least one of both ends of the housing body 1a in the second direction is open, the housing cover 1b is disposed at the open end of the housing 1a, the first wall 11 is formed on the housing body 1a, and the second direction is perpendicular to the first direction.

Illustratively, the housing body 1a may be of a hollow structure with an opening formed in one end; the housing body 1a may also be of a hollow structure with openings formed in two opposite ends. The housing body 1a may be in various shapes, for example, a prismatic shape. The housing cover 1b is a component that closes the opening of the housing body 1a to isolate the internal environment of the battery cell 100 from the external environment. The housing cover 1b and the housing body 1a jointly define a mounting cavity for accommodating the electrode assembly 3, an electrolyte, and other components. The shape of the housing cover 1b may be adapted to the shape of the housing body 1a. For example, the housing body 1a is of a rectangular parallelepiped structure, and the housing cover 1b is of a rectangular plate-shaped structure adapted to the housing body 1a. For another example, the housing body 1a is of a cylindrical structure, and the housing cover 1b is of a circular plate-shaped structure adapted to the housing body 1a. The housing cover 1b may also be made of various materials, such as copper, iron, aluminum, steel, aluminum alloy, and plastic. The housing cover 1b and the housing body 1a may be made of the same or different materials.

In an embodiment in which an opening is formed in one end of the housing body 1a, one housing cover 1b may be correspondingly provided. In an embodiment in which openings are formed in two opposite ends of the housing body 1a, two housing covers 1b may be correspondingly provided. The two housing covers 1b close the two openings of the housing body 1a, respectively, and the two housing covers 1b and the housing body 1a jointly define a mounting cavity. The housing body 1a is provided with the first wall 11, and the pressure relief structure 2 may be integrally formed with the first wall 11 or may be provided separately from the first wall 11. The pressure relief structure 2 is disposed on the housing body 1a, so that the structure of the housing cover 1b can be simplified, and meanwhile, this enables to shorten the distance between the pressure relief structure 2 and the main body of the electrode assembly 3, thereby shortening the path through which the discharge medium flows to the pressure relief structure 2 during pressure relief, shortening the time for the discharge medium to reach the pressure relief structure 2, and improving the timeliness of pressure relief of the battery cell 100; thus, it is beneficial to further improving the reliability of the battery cell 100.

In the above technical solution, the first wall 11 is formed on the housing body 1a, so that the structure of the housing cover 1b can be simplified, and meanwhile, this enables to shorten the distance between the pressure relief structure 2 and the main body of the electrode assembly 3, thereby shortening the path through which the discharge medium flows to the pressure relief structure 2 during pressure relief, shortening the time for the discharge medium to reach the pressure relief structure 2, and improving the timeliness of pressure relief of the battery cell 100.

For example, one end of the housing body 1a in the second direction is open, and the first wall 11 is disposed at an end of the housing body 1a distal to the open end. Alternatively, both ends of the housing body 1a in the second direction are open, respectively, the first wall 11 extends to the open ends on both sides, and two opposite ends of the first wall 11 are connected to two end covers, respectively.

Referring to FIG. 4, in some embodiments, the pressure relief structure 2 and the first wall 11 are integrally formed; or as shown in FIG. 3, the pressure relief structure 2 and the first wall 11 are provided separately, and the pressure relief structure 2 is mounted on the first wall 11.

When the pressure relief structure 2 and the first wall 11 are integrally formed, a score groove 11b may be formed in the first wall 11, a region of the first wall 11 corresponding to the score groove 11b forms a weakened zone of the pressure relief structure 2, and the weakened zone is configured to crack when the pressure of the battery cell 100 is relieved. The pressure relief structure 2 features a simple forming method and low production cost. It may be understood that the score groove 11b is formed in the inner surface of the first wall 11 and/or the outer surface of the first wall 11.

It can be seen that in the above technical solution, the pressure relief structure 2 and the first wall 11 are integrally formed, so that the pressure relief structure 2 features a simple forming method, which can reduce the number of components consisting of the battery cell 100, and can simplify the structure of the battery cell 100 and reduce the cost.

In the embodiments of the present application, the shape of the score groove 11b is not specifically limited. For example, the score groove 11b includes one first straight groove segment and four second straight groove segments, and two ends of the first straight groove segment are connected to two second straight groove segments disposed at a preset included angle, respectively, so that both ends of the score groove 41 can form a substantially Y-shape, respectively.

When the pressure relief structure 2 and the first wall 11 are provided separately, the pressure relief structure 2 and the housing 1 are two separate components, and the two components are mounted together after being separately formed. The pressure relief structure 2 may be components such as an anti-explosion sheet, an anti-explosion valve, and a safety valve, and the pressure relief structure 2 may be mounted on the first wall 11 by means of bonding, welding, and the like. The first wall 11 is provided with a through hole, and the pressure relief structure 2 is mounted in the through hole; when the internal pressure of the battery cell 100 reaches a threshold or the temperature reaches a threshold, the pressure relief structure 2 opens at least a part of the through hole, and the discharge medium inside the battery cell 100 is discharged through the through hole to relieve the pressure inside the battery cell 100.

It can be seen that in the above technical solution, the pressure relief structure 2 and the first wall 11 are configured as separate components, so that it is convenient to dispose the pressure relief structure 2 on the housing 1, which has low generation difficulty and high efficiency, and can improve the production efficiency of the battery cell 100.

Taking the pressure relief structure 2 being an anti-explosion sheet as an example, the anti-explosion sheet is a sheet with a strength in at least a part of the region less than the strength of the first wall 11, the anti-explosion sheet covers the through hole, and the anti-explosion sheet is welded to the first wall 11. When the internal pressure of the battery cell 100 reaches a threshold or the temperature reaches a threshold, the anti-explosion sheet is at least partially destroyed, and thus at least a part of the through hole is opened to relieve the pressure inside the battery cell 100.

In a second aspect, an embodiment of the present application provides a battery 200, including the battery cell 100 described above.

In the above technical solution, since the battery 200 adopts the battery cell 100 described above, and the battery cell 100 has good use reliability, it is beneficial to improving the reliability of the battery 200.

In a third aspect, an embodiment of the present application provides an electric device 1000, including the battery 200 described above. The battery 200 is configured to provide electric energy.

In the above technical solution, since the electric device 1000 adopts the battery 200 described above, and the battery 200 has good reliability, it is beneficial to improving the reliability of the electric device 1000.

Referring to FIGs. 3 to 8 again, the battery cell 100 according to specific embodiments of the present application is described.

In the embodiments of the present application, the battery cell 100 includes a housing 1, a pressure relief structure 2, and an electrode assembly 3. The housing 1 is provided with a first wall 11. The pressure relief structure 2 is disposed on the first wall 11. The electrode assembly 3 is disposed in the housing 1 and includes a plurality of electrode plate layers 30 stacked in a first direction, where the plurality of electrode plate layers 30 include cathode electrode plate layers 31 and anode electrode plate layers 32, each electrode plate layer 30 includes an electrode plate body 301, a first active substance layer 302, and a second active substance layer 303, and the first active substance layer 302 and the second active substance layer 303 are disposed on both sides of the thickness of the electrode plate body 301, respectively.

As shown in FIGs. 6 and 7, all the electrode plate layers 30 are configured as a first preset electrode plate layer 30a, a distance x1 between the first active substance layer 302 of the first preset electrode plate layer 30a and the first wall 11 is greater than a distance x2 between the second active substance layer 303 of the first preset electrode plate layer and the first wall 11, and the first direction is parallel to a plane where the first wall 11 is located. As shown in FIG. 8, all the cathode electrode plate layers 31 are configured as a first preset electrode plate layer 30a and all the anode electrode plate layers 32 are configured as a second preset electrode plate layer 30b, a distance x1 between the first active substance layer 302 of the first preset electrode plate layer 30a and the first wall 11 is greater than a distance x2 between the second active substance layer 303 of the first preset electrode plate layer and the first wall 11, and the distance between the first active substance layer 302 of the second preset electrode plate layer 30b and the first wall 11 is equal to the distance between the second active substance layer 303 of the second preset electrode plate layer and the first wall 11.

In the above technical solution, the amount of the active substance of the battery cell 100 proximal to the first wall 11 is relatively small, and the pressure relief structure 2 is disposed on the first wall 11, so that when the battery cell 100 expands and deforms, the probability of damage such as cracking of the pressure relief structure 2 on the first wall 11 can be reduced, and meanwhile, the probability of liquid leakage due to the cracking of the pressure relief structure 2 can also be reduced to a certain extent, thereby improving the reliability of the battery cell 100.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing, wherein the housing is provided with a first wall;
a pressure relief structure, wherein the pressure relief structure is disposed on the first wall; and
an electrode assembly, wherein the electrode assembly is disposed in the housing and comprises a plurality of electrode plate layers stacked in a first direction, wherein the plurality of electrode plate layers comprises cathode electrode plate layers and anode electrode plate layers, each electrode plate layer comprises an electrode plate body, a first active substance layer, and a second active substance layer, and the first active substance layer and the second active substance layer are disposed on both sides of a thickness of the electrode plate body, respectively, wherein
at least one electrode plate layer is configured as a first preset electrode plate layer, a distance x1 between the first active substance layer of the first preset electrode plate layer and the first wall is greater than a distance x2 between the second active substance layer of the first preset electrode plate layer and the first wall, and the first direction is parallel to a plane where the first wall is located.

2. The battery cell according to claim 1, wherein
at least one cathode electrode plate layer is configured as the first preset electrode plate layer; or
at least one anode electrode plate layer is configured as the first preset electrode plate layer, and the cathode electrode plate layer adjacent to at least a part of the anode electrode plate layer configured as the first preset electrode plate layer is also configured as the first preset electrode plate layer.

3. The battery cell according to claim 2, wherein
all the cathode electrode plate layers in the plurality of electrode plate layers are configured as the first preset electrode plate layer; or
all the electrode plate layers are configured as the first preset electrode plate layer.

4. The battery cell according to claim 2 or 3, wherein the cathode electrode plate layer and the anode electrode plate layer adjacent to each other are configured as the first preset electrode plate layer, respectively, and in the cathode electrode plate layer and the anode electrode plate layer adjacent to each other, the first active substance layer of the cathode electrode plate layer and the first active substance layer of the anode electrode plate layer are disposed face-to-face or back-to-back.

5. The battery cell according to any one of claims 2 to 4, wherein at least one anode electrode plate layer and two cathode electrode plate layers adjacent thereto are configured as the first preset electrode plate layer, respectively, the first active substance layer of the at least one anode electrode plate layer and the first active substance layer of one of the adjacent cathode electrode plate layers are disposed face-to-face, and the second active substance layer of the at least one anode electrode plate layer and the second active substance layer of the other one of the adjacent cathode electrode plate layers are disposed face-to-face.

6. The battery cell according to any one of claims 1 to 5, wherein x1 - x2 ≥ 2 mm.

7. The battery cell according to claim 6, wherein x1 - x2 ≤ 12 mm.

8. The battery cell according to any one of claims 1 to 7, wherein at least one cathode electrode plate layer is configured as the first preset electrode plate layer, and a distance x11 between the first active substance layer of the at least one cathode electrode plate layer and the first wall is greater than or equal to 3 mm.

9. The battery cell according to claim 8, wherein x11 ≤ 17 mm.

10. The battery cell according to any one of claims 1 to 7, wherein at least one anode electrode plate layer is configured as the first preset electrode plate layer, and a distance x12 between the first active substance layer of the at least one anode electrode plate layer and the first wall is greater than or equal to 2 mm.

11. The battery cell according to claim 10, wherein x12 ≤ 15 mm.

12. The battery cell according to any one of claims 1 to 11, wherein a number of layers of the first preset electrode plate layer accounts for at least 16% of a total number of layers of the electrode plate layer.

13. The battery cell according to claim 12, wherein a proportion of the number of layers of the first preset electrode plate layer to the total number of layers of the electrode plate layer does not exceed 50%.

14. The battery cell according to claim 13, wherein the proportion of the number of layers of the first preset electrode plate layer to the total number of layers of the electrode plate layer does not exceed 24%.

15. The battery cell according to any one of claims 1 to 14, wherein at least one electrode plate layer is configured as a second preset electrode plate layer, and a distance between the first active substance layer of the second preset electrode plate layer and the first wall is equal to a distance between the second active substance layer of the second preset electrode plate layer and the first wall.

16. The battery cell according to claim 15, wherein a plurality of first preset electrode plate layers and a plurality of second preset electrode plate layers are alternately stacked one by one.

17. The battery cell according to claim 15 or 16, wherein all the cathode electrode plate layers are configured as the first preset electrode plate layer, and all the anode electrode plate layers are configured as the second preset electrode plate layer.

18. The battery cell according to any one of claims 1 to 17, wherein
the electrode assembly is a stacked electrode assembly, and a stacking direction of the anode electrode plate layer and the cathode electrode plate layer in the electrode assembly is the first direction; or
the electrode assembly is a wound electrode assembly, and an axial direction of the electrode assembly is perpendicular to the first direction.

19. The battery cell according to any one of claims 1 to 18, wherein the housing is provided with two second walls disposed face-to-face in the first direction, the first wall is connected to the two second walls, and the second wall is a wall with a largest area in the housing.

20. The battery cell according to any one of claims 1 to 19, wherein the pressure relief structure and post terminals of the battery cell are separately disposed on walls on different sides of the housing.

21. The battery cell according to any one of claims 1 to 20, wherein the housing comprises a housing body and a housing cover, at least one of both ends of the housing body in a second direction is open, the open end of the housing body is provided with the housing cover, the first wall is formed on the housing body, and the second direction is perpendicular to the first direction.

22. The battery cell according to any one of claims 1 to 21, wherein
the pressure relief structure and the first wall are integrally formed; or
the pressure relief structure and the first wall are separately provided, and the pressure relief structure is mounted on the first wall.

23. A battery, comprising the battery cell according to any one of claims 1 to 22.

24. An electric device, comprising the battery according to claim 23, wherein the battery is configured to provide electric energy.
